# EUROPÄISCHE PATENTSCHRIFT

(11) **EP 2 046 481 B1**
(45) Veröffentlichungstag und Bekanntmachung des Hinweises auf die Patenterteilung: **23.03.2011**
(21) Anmeldenummer: 07818000.7
(22) Anmeldetag: 25.06.2007
(51) Int. Cl.: B01D 46/44, F01N 11/00

(54) **VERFAHREN UND ANORDNUNG ZUM TESTEN EINES PARTIKELFILTERS FÜR EINEN VERBRENNUNGSMOTOR**
METHOD AND ARRANGEMENT FOR TESTING A PARTICULATE FILTER FOR AN INTERNAL COMBUSTION ENGINE
PROCÉDÉ ET DISPOSITIF PERMETTANT DE TESTER UN FILTRE À PARTICULES POUR UN MOTEUR À COMBUSTION INTERNE

(30) Priorität: 27.06.2006 DE 102006029493
(43) Veröffentlichungstag der Anmeldung: 15.04.2009
(73) Patentinhaber: Roppelt, Helmut, 76646 Bruchsal (DE)
(72) Erfinder: Roppelt, Helmut, 76646 Bruchsal (DE)
(74) Vertreter: Kesselhut, Wolf
(86) Internationale Anmeldenummer: PCT/EP2007/005569
(87) Internationale Veröffentlichungsnummer: WO 2008/000405

(56) Entgegenhaltungen:
- EP-A- 0 632 255
- WO-A-02/102663
- WO-A-2006/020731
- DE-C1- 19 617 160
- FILTEQ GMBH KARLSRUHE: "Der Staubdosierer NDF 100, Version NDF 100-3FI (Injektor Dispergierkopf)" AUSZUG AUS BEDIENUNGSANLEITUNG, Januar 2005 (2005-01), XP007910409 Gefunden im Internet: URL:http://www.filteq.de/Staubdosierer_NDF 100-3FI_-_Injektor_-_Auszug.PDF>
- FILTEQ GMBH KARLSRUHE: "Filter test rig according to VDI/DIN 3926 and ASTM D6830-02" September 2004 (2004-09), XP007910410 Gefunden im Internet: URL:www.filteq.de/Filter_tester_heated_Nov _2004.pdf> [gefunden am 2009-10-30]
- VEREIN DEUTSCHER INGENIEURE: "VDI 3926. Prüfung von Filtermedien für Abreinigungsfilter - Standardprüfung zur vergleichenden Bewertung von abreinigbaren Filtermedien [Testing of cleanable filter media - Standard test for the evaluation of cleanable filter media]" VDI/DIN-HANDBUCH REINHALTUNG DER LUFT, Bd. 6, Oktober 2004 (2004-10), Seiten 1-31, XP008105556

## Beschreibung

Die Erfindung betrifft ein Verfahren zum Testen eines Rußpartikelmters für einen Verbrennungsmotor gemäß dem Oberbegriff von Anspruch 1.

Bei den heutzutage in Kraftfahrzeugen eingesetzten Partikelfiltern, insbesondere bei den seit kurzem durch gesetzliche Vorschriften zur Reduzierung des Feinstaubgchalts in der Umgebungsluft gesetzlich vorgeschriebenen Russpartikelfiltern in den Abgassystemen von Dieselmotoren, besteht das Problem, dass der eigentliche Filtereinsatz in ein Gehäuse eingesetzt werden muss, das den baulichen Gegebenheiten des Kraftfahrzeugs in Hinblick auf den Verlauf des Abgasleitungssystems angcpasst ist.

Hierbei besteht die Schwierigkeit, dass es durch die Form des Filtergehäuses zu Verwirbelungen des Abgases kommen kann, die im Filtersubstrat lokal zu einer erhöhten Konzentration von Partikeln führen, wohingegen an anderen Stellen des Filtersubstrats nahezu keine Partikel angelagert werden. Durch die unterschiedlichen Partikelkonzentrationen besteht die Gefahr, dass sich bei der Regeneration des Filters Russnester bilden, die beim Abbrennen lokal eine übermäßige Temperaturerhöhung bewirken, durch die das Filtersubstrat nach nur wenigen Regenerationen beschädigt werden kann.

Um diesen zuvor genannten Problemen zu begegnen, werden die Filter, d.h. die Filtergehäuse und die darin enthaltenen Substrate, in bekannter Weise einer Dauererprobung unverzogen, bei der die Filter üblicher Weise in bekannten Tastanordnungen durch einen Verbrennungsmotor über einen längeren Zeitraum hinweg mit Partikeln beladen, und anschließen unter Zugrundelegung von unterschiedlichen Fahrzuständen in vorgegebenen Zeitabständen regeneriert werden.

Hierbei besteht die Schwierigkeit, dass selbst das von einem Dieselmotor erzeugte Abgas mit 5 bis 20 mg pro Kubikmeter nur eine vergleichsweise geringe Konzentration an Partikeln besitzt, sodass für die Vollständige Beladung eines durchschnittlichen Pkw-Filters mit einer Menge von z.B. 20 bis 50 g Russ eine Zeitdauer von ca. 10 Stunden anzusetzen ist, was die Dauererprobung der Filter in sämtlichen zu simulierenden Fahrzuständen sehr zeitaufwändig gestaltet.

Ein weiteres Problem besteht bei den zuvor genannten Testprüfständen darin, dass die Filter zur Bestimmung der Menge an darin enthaltenen Partikeln in der Regel ausgebaut, von Hand auf einer geeigneten Präzisionswaage gewogen, und anschließend wieder in die Testanordnung eingebaut werden müssen, was den zeitlichen Aufwand zusätzlich erhöht, und zudem auch die Gefahr von systematischen Fehlern bei der Dauererprobung der Partikelfilter vergrößert.

Die zuvor skizzierten Probleme werden bei Partikelfiltern für andere Motortypen für ZweiTakt- und Vier-Takt-Ottomotoren aufgrund der gegenüber Dieselmotoren reduzierten Partikelmenge im Abgas zusätzlich noch vergrößert.

Aus der WO -A-2006/020731 ist ein Verfahren zum Testen eines Rußpartikel filters für einen Dieselmotor bekannt, welcher einlassseitig mit einem mit Partikeln beladenen Heißgasstrom beaufschlagt wird, welcher in einem Brenner erzeugt wird. Die Schrift gibt keinen Hinweis darauf, dem Heißgasstrom zusätzliche Rußpartikel zuzuführen, die in einem Partikel-Vorratsbehälter bevorratet werden, um die Menge an im Heißgas enthaltenem Ruß zu erhöhen und hierdurch die zum Beladen eines Rußpartikelfilters benötigte Zeitdauer zu verkürzen.

Aus dem Dokument Verein deutscher Ingenieure "VDI 3926: Prüfung von Filtermedien für Abrcinigungsfilter- Stundardprüfung zur vergleichenden Bewertung von abreinigbaren Filtermedien...." aus dem VDI/DIN-Handbuch Reinhaltung der Luft, Brand 6, Oktober 2004, Seiten 1 bis 31 ist eine Anordnung zum Testen eines Partikelfilters bekannt, die einen Verdichter zur Förderung eines Druckgases, einen Partikel-Vorratsbehälter und eine Dosiereinrichtung zur Dosierung der Partikel aus dem Vorratsbehälter in den Gasstrom sowie eine dem Partikel-Vorratsbchälter zugeordnete Wiegeeinrichtung umfasst. Das Dokument gibt keinen Hinweis darauf, die in den Heißgasstrom während eines vorgegebenen Mess-Zeitraums eingebrachte Menge an Rußpartikeln durch Wiegen des Partikel-Vorratsbehälters und Differenzbildung zwischen dem anfänglichen Gewicht des Partikel-Vorratsbehälters und dem Gewicht desselben nach einer vorgegebenen Zeitdauer zu bestimmen.

Demgemäß ist es eine Aufgabe der Erfindung, ein Verfahrens, sowie eine Testanordnung zur Durchführung des Verfahrens zu schaffen, mit welchen sich die Zeitdauer zur Erprobung von Partikelfiltern verkürzen lässt.

Diese Aufgaben werden erfindungsgemäß durch die Merkmale des Anspruchs 1 gelöst.

Weitere Merkmale der Erfindung sind in den Unteransprüchen beschrieben.

Gemäß der Erfindung werden bei einem Verfahren zum Testen eines Partikelflters für einen Verbrennungsmotor, welcher ein Gehäuse mit einem darin enthaltenen Filtersubstrat umfasst, das einlassscitig mit einem, mit Partikeln beladenen Heißgasstrom, insbesondere mit Abgas beaufschlagt wird, die Partikel in einem Partikel-Vorratsbehälter gespeichert. Aus diesem werden die Partikel während eines Testlaufs mit Hilfe einer Dosiereinrichtung entnommen und bevorzugt in fluider Form in den Heißgasstrom eingebracht. Um dabei die während eines vorgegebenen Mess-Zeitraums eingebrachte Menge an Partikeln zu bestimmen, wird gemäß der Erfindung der gesamte Partikel-Vorratsbehälter mit den darin enthaltenen Partikeln gewogen, sodass insbesondere durch Differenzbildung zwischen dem anfänglichen Gewicht des Vorratsbehälters und dem Gewicht desselben nach einer vorgegebenen Zeitdauer die Gesamtmenge der dem Vorratsbehälter entnommenen Partikel bestimmt werden kann, die der Menge der in den Heißgasstrom eingebrachten Partikeln entspricht.

Durch die Erfindung ergibt sich der Vorteil, dass durch den externen Vorrat an Partikeln im Partikel-Vorratsbehälter- die im Falle von Dieselmotoren bevorzugt in Form von käuflichem Industrieruß bereitgestellt werden - eine erheblich höhere Konzentration von Rußpartikeln im Heißgasstrom erzielt werden kann, die im Bereich von 1000 mg pro Kubikmeter liegt. Hierdurch lässt sich die Zeitdauer zum vollständigen Beladen des Filters selbst gegenüber alten Dieselmotoren, die im überfetteten Bereich mit einer überhöhten Einspritzmenge an Dieselkraftstoff betrieben werden, auf ca. 1/50 bis 1/100 der bei diesen Motoren benötigten Zeit reduzieren.

Ein weiterer Vorteil des erfindungsgemäßen Verfahrens ergibt sich dadurch, dass für die Dauererprobung ein zeitaufwändiger und häufig mit systematischen Fehlern verbundener Aus- und Einbau der Partikelfilter in die Testanordnungen zum Wiegen derselben nicht mehr zwingend erforderlich ist, so dass neben einem weiteren Zeitgewinn auch die Gefahr von systematischen Fehlern beim Wiegeprozess reduziert wird.

Ein weiterer wesentlicher Vorteil des erfindungsgemäßen Verfahrens ergibt sich in diesem Zusammenhang dadurch, dass das Gesamtgewicht des Partikel-Vorratsbehälters über den gesamten Test-Zeitraum in vorgegebenen Zeitintervallen von beispielsweise einer Sekunde, bestimmt wird, und somit durch Differenzbildung zwischen dem momentanen Gesamtgewicht und dem anfänglichen Gesamtgewichts des Partikel-Vorratsbehälters in vorteilhafter Weise eine Online-Messung der dem Partikel-Vorratsbehälter entnommenen Gesamtmenge an Partikeln durchgeführt werden kann, durch die sich die Gesamtmenge der dem Partikel-Filter zugeführten Partikel - und damit der Beladungsgrad - mit hoher Präzision über den gesamten Beladungszyklus hinweg verfolgen lässt.

Durch diese Online-Messung in vorgegebenen Zeitintervallen ergibt sich zudem die Möglichkeit, insbesondere beim Einsatz einer Dosiereinrichtung mit einer veränderbaren Förderleistung, d.h. einer veränderbaren Menge an pro Zeiteinheit geförderten Partikeln, die Förderleistung entsprechend zu erhöhen oder zu erniedrigen, um die Gesamtmenge an geförderten Partikeln am Ende des Mess-Zeitraums an einen gewünschten Vorgabewert oder Sollwert anzugleichen.

Hierbei kann es weiterhin in vorteilhafter Weise vorgesehen sein, dass die Förderleistung der Dosiereinrichtung um einen festen Wert, beispielsweise um einen festen Prozentsatz der maximalen Förderleistung, erhöht - oder erniedrigt wird, und beispielsweise nach drei Sekunden ein gleitender Mittelwert aus den z.B. letzten drei Messungen der entnommenen Partikelmenge gebildet wird, welcher einen Ist-Wert für die entnommene Gesamtmenge an Partikeln bildet, der im Anschluss daran mit einem auf Basis der seit Beginn des Test-Zeitraums verstrichenen Zeitdauer und der jeweils zugehörigen Förderleistung der Dosiereinrichtung rechnerisch bestimmten Sollwerts für die entnommene Gesamtmenge an Partikeln verglichen wird.

Wenn der Ist-Wert den Soll-Wert für die entnommene Gesamtmenge an Partikeln unterschreitet, wird gemäß einem weiteren der Erfindung zugrunde liegenden Gedanken die Förderleistung der Dosiereinrichtung bevorzugt um einen festen Wert und für einen festen Zeitraum, beispielsweise drei Sekunden oder drei Messintervalle, erhöht und beim Überschreiten entsprechend erniedrigt.

Durch diese Art der Erhöhung und der Erniedrigung der Förderleistung der Dosierpumpe um einen festen Wert, der entsprechend oberhalb, bzw. unterhalb des für die Berechnung des Sollwertes oder Zielwerts erforderlichen durchschnittlichen Wertes für die Förderleistung liegt, ergibt sich der Vorteil, dass die bei einer empfindlicheren Regelung üblicher Weise auftretenden Regelungsprobleme, wie ein Übersteuern des Reglers oder auch ein Untersteuern desselben, in der Praxis nicht auftreten, selbst wenn die Partikelmenge, die durch die Dosiereinrichtung gefördert wird, kurzzeitig stark erhöht oder auch stark verringert wird.

Eine solche kurzzeitige Erhöhung oder auch Erniedrigung ergibt sich insbesondere dann, wenn am Partikel-Vorratsbehälter eine Klopf- und/oder Rütteleinrichtung vorgesehen ist, die den Vorratsbehälter in regelmäßigen Zeitabständen mit leichten Schlägen beaufschlagt, um Verklumpungen oder Partikelbrücken zu verhindern, welche dann insbesondere in Klumpenform in den Wirkbereich der Dosiereinrichtung gelangen, und die Fördermenge - und damit die Förderleistung - kurzzeitig stark erhöhen.

Bei der bevorzugten Ausführungsform der Erfindung werden die Partikel bevorzugt durch eine Dosierschnecke oder Förderschnecke, die vorzugsweise unmittelbar unterhalb des Partikel- Vorratsbehälters angeordnet ist, gefördert, wozu die Schnecke durch einen Elektromotor und einen entsprechenden Drehzahlregler mit einer vorgegebenen Drehzahl angetrieben wird.

Um beispielsweise die Fördermenge an Partikeln in der zuvor beschriebenen Weise zu erhöhen, wird die Drehzahl des Motors um einen vorgegebenen Drehzahlwert erhöht, bzw. erniedrigt, wenn der durch Wiegen des Partikel-Vorratsbehälters als gleitender Mittelwert bestimmte Ist-Wert für die geförderte Gesamtmenge den Vorgabewert oder Sollwert überschreitet, bzw. unterschreitet.

Nach einem weiteren der Erfindung zugrundeliegenden Gedanken werden die Partikel nach ihrem Austritt aus der Förderschnecke beispielsweise mittels einer bekannten Venturidüse in ein Fluid überführt, das bevorzugt ein inertes Trägergas, wie Stickstoff, enthält. Das Fluid wird über eine Zuleitung, z.B. eine Schlauch, zu einem Injektor gefördert, welcher stromaufwärts des Einlasses des Partikelfilters angeordnet ist. Der Injektor kann beispielsweise ein direkt in den Heißgasstrom eintauchendes Rohr mit darin auf der stromabwärtigen Seite eingebrachten Löchern umfassen, aus welchen das Fluid austritt und nach Vermischen mit dem Heißgas unmittelbar zum Einlass des Partikelfilters gefördert wird.

Bei der bevorzugten Ausführungsform der Erfindung wird der Heißgasstrom durch einen Brenner erhitzt, beispielsweise einen Ölbrenner, wobei in Hinblick auf eine für einen Verbrennungsmotor typische Ausgestaltung des Heißgasstromes bevorzugt stromaufwärts des Brenners ein Verdichter oder wenigstens ein Gebläse angeordnet ist, welches die Luft zur Erzeugung des Heißgasstromes ansaugt und beispielsweise auf einen Druck von 0,2 bis 1,5 bar vorverdichtet, bevor diese durch den Brenner erhitzt wird.

Obgleich das erfindungsgemäße Verfahren auch mit einem herkömmlichen Verbrennungsmotor zur Erzeugung des Heißgasstromes betrieben werden kann, ergibt sich durch den Einsatz eines Brenners der Vorteil, dass lediglich die Energie zum Erhitzen des Heißgases, d.h. der vom Verdichter, beispielsweise einem Drehkolbenverdichter, angesaugten Luft, bereitgestellt werden muss, wobei sich auch die Temperatur des Heißgasstroms erheblich feinfühliger regulieren lässt. Zudem kann die zum Betrieb eines Motors erforderliche Infrastruktur, wie Kühleinrichtung, Bremseinrichtung zur Abfuhr der erzeugten mechanischen Leistung, sowie auch die Geräuschdämmung etc. entfallen, und die Größe des Vordrucks des Heißgases lässt sich durch einen entsprechenden Betrieb des Verdichters im Vergleich zu einem Verbrennungsmotor mit einem vergleichsweise geringeren Vorrichtungsaufwand in wohl definierter, reproduzierbarer Weise erhöhen oder erniedrigen.

So kann beispielsweise durch eine Erhöhung der Anzahl an vorgeschalteten Verdichtern der Druck des Heißgasstromes nicht nur auf ca. 1 bar - wie bei den heutigen Verbrennungsmotoren - sondern auch auf 2 bar oder gar 3 bar erhöht werden, wodurch auch Partikelfilter getestet werden können, die in zukünftigen Verbrennungsmotoren mit Turboladern zum Einsatz gelangen, bei denen der Ladedruck beispielsweise zwei bar oder mehr beträgt, und bei denen sich dementsprechend auch der Druck im Abgassystem in etwa um den selben Wert erhöht.

Die Erfindung wird nachfolgend mit Bezug auf die Zeichnungen anhand einer Testanordnung zur Durchführung des zuvor beschriebenen Verfahrens beschrieben.

In den Zeichnungen zeigt:

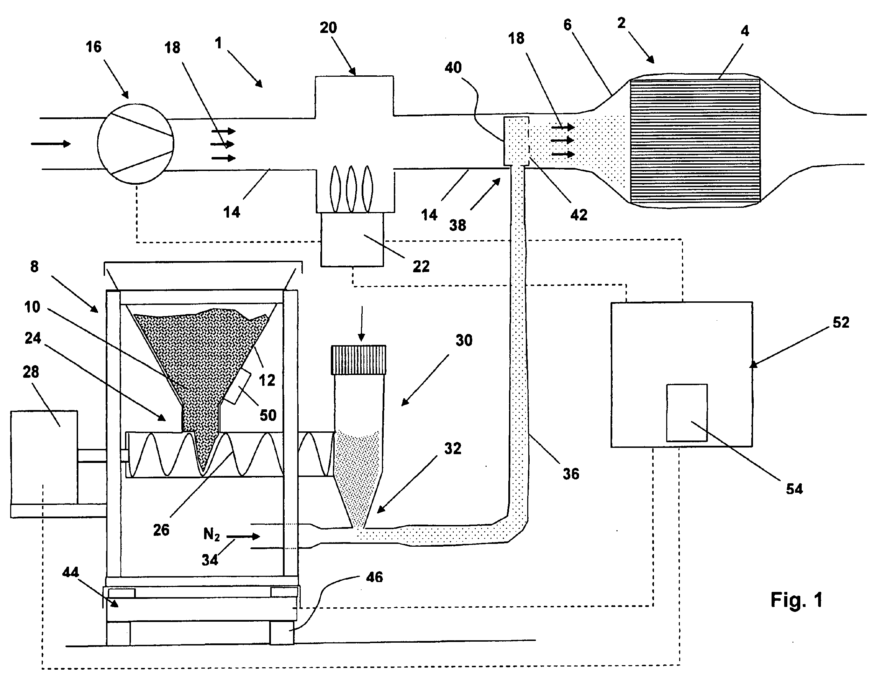

- Fig. 1: eine schematische Darstellung der Tastanordnung zur Veranschaulichung der Wirkungsweise der einzelnen Komponenten.

Gemäß der Darstellung von Fig. 1 umfasst eine Anordnung oder ein Teststand 1 zum Testen eines Partikelfilters 2 für einen Verbrennungsmotor welcher ein Filtersubstrat 4 aufweist, das in einem Filtergehäuse 6 aufgenommen ist, einen Partikel-Vorratsbchälter 8, in welchem die Partikel 10 in einer größeren Menge bevorratet sind. Im Falle eines zu testenden Russfilters 2 für einen nicht näher gezeigten Dieselmotor können im vorzugsweise nach unten hin trichterförmig zusammen laufenden Gehäuse 12 des Vorratsbchälters 8 beispielsweise 8 Kg Industrieruß aufgenommen sein, um z.B. eine Dauerprüfung des Filters 2 über drei bis vier Tage hinweg bei unterschiedlichsten Fahrzuständen eines Kraftfahrzeugs zu simulieren.

Dem Partikelfilter 2 wird dabei über eine Zuleitung 14 ein Heißgasstrom 18 zugeführt, der in erster Linie durch einen Verdichter 16 angesaugte und auf z.B. I bar oder mehr vorverdichtete Umgebungsluft enthält, die in einer nachgeordneten Brennkammer 20 bevorzugt direkt durch einen Brenner 22 auf eine gewünschte Temperatur erhitzt wird, welche im Wesentlichen der Abgastemperatur eines simulierten Verbrennungsmotors währen eines vorgegebenen Fahrzustandcs entspricht, und die beispielsweise im Bereich zwischen 50 °C und 900 °C liegen kann. Der Verdichter 16 kann beispielsweise ein bekannter Drehkobenverdichter sein, wobei zur Erhöhung der geförderten Luftmenge, bzw. des Vordrucks zwei oder mehrere Verdichter bevorzugt auch kaskadenartig zusammen geschaltet werden können.

Weiterhin kann es vorgesehen sein, die Brennkammer und den Brenner 22, dessen Temperatur bevorzugt über die Menge an zugeführtem Brennstoff verändert wird, mittels eines nicht näher gezeigten Bypass-Kanals zu umgehen, welcher bevorzugt elektrisch beheizbar ist, um auch Fahrzustände bei niedrigen Drehzahlen des Verbrennungsmotors oder auch im Leerlaufbetrieb desselben bei niedrigen Umgebungstemperaturen simulieren zu können.

Wie in Fig. 1 weiterhin gezeigt ist, ist unterhalb des Partikel-Vorratsbehälters 8 ein Dosiereinrichtung 24 angeordnet, welche über einen nicht näher bezeichneten Durchlass am unteren Ende des trichterförmigen Filtergehäuses 12 von oben her mit den Partikeln 10 beaufschlagt wird. Die Dosiereinrichtung 24 umfasst dabei eine Förderschnecke 26, die über einen Elektromotor 28 angetrieben wird, und die die Partikel 10 einer Fluidisiereinrichtung 30 zuführt, die insbesondere eine lediglich schematisch dargestellte Venturi-Düse 32 umfasst, welche die aus der Förderschnecke 26 austretenden Partikel 10 in ein bevorzugt inertes Trägergas, insbesondere Stickstoff, einbringt, das in Fig. 1 durch den Pfeil 34 angedeutet ist.

In der Venturi-Düse 32 werden die durch die Förderschnecke 26 mit einer vorgegebenen Förderleistung, die über die Drehzahl des Elektromotors 28 bestimmt wird, geförderten Partikel 10 in den mit erhöhter Strömungsgeschwindigkeit durch die Venturi-Düse 32 hindurchströmenden Strom des Trägergases 34 vereinzelt und durch diesen entlang der Zuleitung 36 in fluider Form zu einem Injektor 38 gefördert, der die Partikel 10 in den Heißgasstrom 18 einbringt, über welchen sie dann zum Partikelfilter 2 transportiert werden, um diesen mit einer vorgegebenen Menge an Partikeln 10, z.B. mit insgesamt 20 g an Partikeln, zu beladen.

Der Injektor 38 umfasst bevorzugt ein in den Zufuhrkanal oder die Zuleitung 14 in Querrichtung eingebrachtes Röhrchen 40, welches an seinem einen Ende mit der Zuleitung 36 in direkter Strömungsverbindung steht, und welches an seinem anderen Ende, d.h. an seiner Stirnseite, verschlossen ist. In die zylindermantelförmige Umfangsfläche des Röhrchens 40 sind auf der stromabwärtigen Seite, d.h. der dem Partikelfilter 2 zugewandten Seite, mehrere Durchgangsbohrungen 42 eingebracht, durch die hindurch das Fluid aus Partikeln 10 und inertem Trägergas 34 austritt und sich mit dem durch den Brenner 22 erzeugten Heißgasstrom 18 aus erhitzter Luft und brennerseitigem Abgas vermischt.

Wie in der Darstellung von Fig. 1 weiterhin lediglich schematisch angedeutet ist, sind der Partikel-Vorratsbehälter 8 sowie bevorzugt auch die Förderschnecke 26 auf einer Wiegeeinrichtung oder Waage 44 angeordnet, die eine bekannte elektronische Präzisionswaage umfasst, mit der sich das Gesamtgewicht des Partikel-Vorratsbehälters 8, das z.B. 80 oder 100 Kg betragen kann, mit einer Genauigkeit von beispielsweise plus/minus 1 g bestimmen lässt.

Um hierbei zusätzliche mechanische Entkopplung des Partikel-Vorratsbehälters 8 von umliegenden Zusatzgeräten wie Absauggebläsen, Inertgas-Erzeugem und Pumpen zu erhalten, kann die Wiegeeinrichtung 44 auf schematisch gezeigten Schwingungsdämpfern 46 angeordnet sein. Hierdurch lassen sich die schwingungsbedingten Messungenauigkeiten der Wiegeeinrichtung 44 nochmals weiter reduzieren. Zudem können der Partikel-Vorratsbehälter 8 und die Wiegeeinrichtung von einer in Fig. 1 nicht näher gezeigten Schall absorbierenden Haube umgeben sein, die die durch Umgebungsgeräusche auf den Partikel-Vorratsbehälter 8, und von diesem auf die Wiegeeinrichtung 44 übertragenen Schallschwingungen sowie auch den Einfluss von Zugluft und dergleichen auf das Wiegeergebnis weiter reduzieren.

Nach einer weiteren Ausführungsform der Erfindung kann am Partikel-Vorratsbehälter 8 eine Klopf- und/oder Rütteleinrichtung 50 angeordnet sein, welche das Gehäuse 6 des Partikel-Vorratsbehälters 8 bevorzugt periodisch, z.B. alle 5 Sekunden, in Vibration versetzen, bzw. einen oder auch mehrere aufeinander folgende Schläge auf das Gehäuse 6 des Behälters 8 ausübt, um Ansammlungen oder Brücken von Partikeln 10 zu zerstören, die sich durch die fortlaufende Entnahme der Partikel 10 am bodenseitigen Ende des Behälters bilden.

Bei der bevorzugten Ausführungsform der Erfindung sind die Wiegeeinrichtung 44 und bevorzugt auch die Dosiereinrichtung 24 mit einer elektronischen Steuerungseinrichtung 52 verbunden, die die von der Wiegeeinrichtung 44 gemessenen Ist-Werte für das momentane Gesamtgewicht des Partikel-Vorratsbehälters 8 beispielsweise in Zeitintervallen von 2 Sekunden mit einem für das Ende des Zeitintervalls vorausberechneten Soll-Wert oder Vorgabewert für das momentane Gesamtgewicht vergleicht, und in Abhängigkeit vom Ergebnis dieses Vergleichs die Förderleistung der Dosiereinrichtung 24 entsprechend erhöht oder erniedrigt. In entsprechender Weise kann anstelle des Soll-Werts für das momentane Gesamtgewicht des Behälters auch eine daraus abgeleitete Größe herangezogen werden, insbesondere die seit Beginn des Mess-Zeitraums entnommene Gesamtmenge an Partikeln, den die elektronische Steuerungseinrichtung 52 bevorzugt fortlaufend durch Differenzbildung aus dem anfänglichen Gesamtgewicht und dem gemessenen momentanen Gesamtgewicht des Partikel-Vorratsbehälters 8 errechnet.

Hierzu erhöht die elektronische Steuerungseinrichtung 52 bevorzugt die Motordrehzahl, und damit die Förderleistung der Förderschnecke 26 um einen vorgegebenen, und insbesondere manuell veränderbaren festen Drehzahl-Vorgabewert, z.B. um 5% der Maximaldrehzahl, wenn der Ist-Wert für die entnommene Gesamtmenge an Partikeln unterhalb des zuvor berechneten Soll-Werts für den Messzeitpunkt liegt. In entsprechender Weise wird die Motordrehzahl um den Drehzahl-Vorgabewert erniedrigt, wenn zu einem bestimmten Messzeitpunkt der Ist-Wert für die entnommene Gesamtmenge an Partikeln den zugehörigen Soll-Wert überschreitet.

Die elektronische Steuerungseinrichtung 52, die bevorzugt durch eine bekannte elektronische Mikroprozessor Schaltung und zugehörige Software realisiert wird, berechnet dabei den Ist-Wert für die seit Beginn eines Mess-Zeitraumes entnommene Menge an Partikeln 10 rechnerisch als gleitenden Mittelwert aus den letzten drei oder fünf Messungen, wodurch periodisch wiederkehrende Schwankungen des Ist-Wertes für das momentane Gesamtgewicht des Partikel-Vorratsbehälters 8, die insbesondere durch die Zerstörung von Partikelbrücken mittels der Klopf- und Rütteleinrichtung 50 hervorgerufen werden, bei der Anpassung der Förderleistung der Dosiereinrichtung 24 nicht zu einem Überschwingen des Systems führen.

Die elektronische Steuerungseinrichtung 52 umfasst weiterhin bevorzugt einen elektronischen Speicher 54, in welchem der Drehzahl-Vorgabewert sowie weitere Prozessparameter wie der Zeitpunkt für den Beginn und das Ende einer Messung sowie der Vorgabewert für die am Ende des Messzeitraums entnommenen Gesamtmenge an Partikeln etc. abgelegt sind.

Darüber hinaus übernimmt die elektronische Steuerungseinrichtung 52 bevorzugt auch alle übrigen Mess- und Aufzeichnungsvorgänge, wie die fortlaufende Messung und Aufzeichnung der Temperatur innerhalb des zu testenden Partikelfilters 2, die Steuerung und Überwachung der Temperatur des Brenners 22, die Förderleistung bzw. den Förderdruck des Verdichters 16, die Förderleistung eines in den Zeichnungen nicht näher gezeigten Inertgaserzeugers, der z.B. einen Stickstoffgenerator sein kann, welcher den Stickstoff z.B. elektrochemisch direkt aus der Umgebungsluft abscheidet, sowie auch die Betätigung der Klopf- und/oder Rütteleinrichtung 50.

### Liste der Bezugszeichen

- 1: Anordnung/Teststand
- 2: Partikelfilter
- 4: Filtersubstrat
- 6: Filtergehäuse
- 8: Partikel-Vorratsbehälter
- 10: Partikel
- 12: Gehäuse
- 14: Zuleitung
- 16: Verdichter
- 18: Heißgasstrom
- 20: Brennkammer
- 22: Brenner
- 24: Dosiereinrichtung
- 26: Förderschnecke
- 28: Elektromotor
- 30: Fluidisiereinrichtung
- 32: Venturi-Düse
- 34: Pfeil
- 36: Zuleitung
- 38: Injektor
- 40: Röhrehen
- 42: Durchgangsbohrungen
- 44: Wiegeeinrichtung
- 46: Schwingungsdämpfer
- 50: Klopf- und Rütteleinrichtung
- 52: elektronische Steuerungseinrichtung
- 54: Speicher

## Patentansprüche

1. Verfahren zum Testen eines Rußpartikelfilters (2) für einen Verbrennungsmotor, welcher einlassseitig mit einem mit Rußpartikeln (10) beladenen Heißgasstrom (18) beaufschlagt wird,
**dadurch gekennzeichnet, dass**
der IIeißgasstrom (18) von einem Verbrennungsmotor oder von einem Brenner (22) und einem stromaufwärts des Brenners (22) angeordneten Gebläse oder einem stromaufwärts des Brenner (22) angeordneten Verdichter (16) erzeugt wird, dass die Rußpartikel (10) dem Heißgasstrom (18) über eine Dosiereinrichtung (24) aus einem Rußpartikel-Vorralsbehälter (8) zugeführt werden, und dass die in den Heißgasstrom (18) während eines vorgegebenen Mess-Zeitraums eingebrachte Menge an Rußpartikeln (10) durch Wiegen des Partikel-Vorratsbchälters (8) mit den darin enthaltenen Rußpartikeln und Differenzbildung zwischen dem anfänglichen Gewicht des Patikel-Vorratsbehälters (8) und dem Gewicht desselben nach einer vorgegebenen Zeitdauer bestimmt wird.

2. Verfahren nach Anspruch 1,
**dadurch gekennzeichnet, dass**
die Rußpartikel (10) dem Heißgasstrom (18) als Fluid zugeführt werden.

3. Verfahren nach Anspruch 2,
**dadurch gekennzeichnet, dass**
das Fluid ein inertes Trägergas (34), insbesondere Stickstoff, ist, oder ein solches enthält.

4. Verfahren nach einem der vorhergehenden Ansprüche,
**dadurch gekennzeichnet, dass**
die von Beginn des Mess-Zeitraums an aus dem Partikel-Vorratshehälter (8) entnommene Gesamtmenge an Rußpartikeln (10) fortlaufend in vorgegebenen Zeitintervallen durch Messung des momentanen Gesamtgewichts des Partikel-Vorratsbehälters (8) als Ist-Wert bestimmt wird.

5. Verfahren nach Anspruch 4,
**dadurch gekennzeichnet, dass**
die Förderleistung der Dosiereinrichtung (24) in Abhängigkeit vom Ist-Wert für die entnommene Gesamtmenge an Rußpartikeln (10) verändert wird.

6. Verfahren nach Anspruch 5,
**dadurch gekennzeichnet, dass**
die Förderleistung der Dosiereinrichtung (24) um einen vorgegebenen Wert erhöht wird, wenn der Ist-Wert für die entnommene Gesamtmenge an Rußpartikeln (10) unterhalb eines Soll-Werts liegt, und die Förderleistung der Dosiereinrichtung (24) um einen vorgegebenen Wert erniedrigt wird, wenn der Ist-Wert für die entnommene Gesamtmenge an Rußpartikeln (10) den Soll-Wert überschreitet.

7. Verfahren nach Anspruch 5 oder 6,
**dadurch gekennzeichnet, dass**
der Ist-Wert für die seit Beginn des Mess-Zeitraums entnommene Menge an Rußpartikel rechnerisch als ein gleitender Mittelwert bestimmt wird.

8. Verfahren nach Anspruch 6,
**dadurch gekennzeichnet, dass**
der Soll-Wert für die seit Beginn des Mess-Zeitraums entnommene Menge an Rußpartikeln (10) rechnerisch auf Basis der Forderleistung und der seit dem Beginn des Mess-Zeitraums verstrichenen Zeitdauer bestimmt wird.

## Claims

1. Method for testing a soot particle filter (2) for a combustion engine, which is exposed to a hot gas stream (18) loaded with soot particles (10) on the inlet side,
**characterized in, that**
the hot gas stream (18) is generated by a combustion engine or by a burner (22) and a blower mounted upstream of the burner (22) or a compressor (16) mounted upstream of the burner (22), that the soot particles (10) are introduced into the hot gas stream (18) by means of a dosing unit (24) out of a soot particle storage container (8), and that the number of soot particles (10) supplied to the hot gas stream (18) during a specified, measured time interval is determined by weighing the particle storage container (8) with the soot particles it contains, and by calculating the difference between the initial weight of the particle storage container (8) and the weight of such after a specified duration of time.

2. Method according to claim 1,
**characterized in, that**
the soot particles (10) are introduced into the hot gas stream (18) as fluid.

3. Method according to claim 2,
**characterized in, that**
the fluid is an inert carrier gas (34), in particular nitrogen, or contains such a carrier gas.

4. Method according to one of the preceding claims,
**characterized in, that**
the total number of soot particles (10) extracted from the particle storage container (8) beginning at the start of the measured time interval is continually determined at specified time intervals by measuring the momentary total weight of the particle storage container (8) at its actual value.

5. Method according to claim 4,
**characterized in, that**
the delivery rate of the dosing unit (24) is altered depending on the actual value of the total number of soot particles (10) extracted.

6. Method according to claim 5,
**characterized in, that**
the delivery rate of the dosing unit (24) is increased by a specified value when the actual value of the total number of soot particles (10) extracted is below a set point value, and the delivery rate of the dosing unit (24) is lowered by a specified value when the actual value of the total number of soot particles (10) extracted exceeds the set point value.

7. Method according to claim 5 or 6,
**characterized in, that**
the actual value of the total number of soot particles extracted since the beginning of the measured time interval is determined by the calculation of a sliding average.

8. Method according to claim 6,
**characterized in, that**
the set point value of the number of soot particles (10) extracted since the beginning of the measured time interval is determined by a calculation based on the delivery rate and the period of time elapsed since the beginning of the measured time interval.

## Revendications

1. Procédé pour tester un filtre à particules de suie (2) pour un moteur à combustion, qui est alimenté côté entrée avec un flux de gaz chaud (18) chargé avec des particules de suie (10),
**caractérisé en ce que**
le flux de gaz chaud (18) est généré par un moteur à combustion ou par un brûleur (22) et une soufflerie disposée en amont du brûleur (22) ou un compresseur (16) disposé en amont du brûleur (22), **en ce que** les particules de suie (10) sont amenées au flux de gaz chaud (18) par un dispositif de dosage (24) à partir d'un réservoir de stockage de particules de suie (18), et **en ce que** la quantité de particules de suie (10) introduite dans le flux de gaz chaud (18) pendant une période de mesure prédéfinie est déterminée par le pesage du réservoir de stockage de particules (8) avec les particules de suie contenues dedans et le calcul de la différence entre le poids initial du réservoir de stockage de particules (8) et le poids du même réservoir après une durée prédéfinie.

2. Procédé selon la revendication 1,
**caractérisé en ce que**
les particules de suie (10) sont amenées au flux de gaz chaud (18) sous forme de fluide.

3. Procédé selon la revendication 2,
**caractérisé en ce que**
le fluide est un gaz porteur (34) inerte, en particulier de l'azote, ou contient un tel gaz.

4. Procédé selon l'une quelconque des revendications précédentes,
**caractérisé en ce que**
la quantité totale de particules de suie (10) prélevée sur le réservoir de stockage de particules (8) à partir du début de la période de mesure est déterminée de façon continue à des intervalles de temps prédéfinis par la mesure du poids total momentané du réservoir de stockage de particules (8) en tant que valeur réelle.

5. Procédé selon la revendication 4,
**caractérisé en ce que**
le débit du dispositif de dosage (24) est modifié en fonction de la valeur réelle pour la quantité totale prélevée de particules de suie (10).

6. Procédé selon la revendication 5,
**caractérisé en ce que**
le débit du dispositif de dosage (24) est augmenté d'une valeur prédéfinie lorsque la valeur réelle pour la quantité totale prélevée de particules de suie (10) est inférieure à une valeur théorique et le débit du dispositif de dosage (24) est réduit d'une valeur prédéfinie lorsque la valeur réelle pour la quantité globale prélevée de particules de suie (10) dépasse la valeur théorique.

7. Procédé selon la revendication 5 ou 6,
**caractérisé en ce que**
la valeur réelle pour la quantité de particules de suie prélevée depuis le début de la période de mesure est déterminée par calcul sous forme d'une valeur moyenne mobile.

8. Procédé selon la revendication 6,
**caractérisé en ce que**
la valeur théorique pour la quantité de particules de suie (10) prélevée depuis le début de la période de mesure est déterminée par calcul sur la base du débit et de la durée écoulée depuis le début de la période de mesure.
